# EUROPÄISCHE PATENTSCHRIFT

(11) **EP 1 590 125 B1**
(45) Veröffentlichungstag und Bekanntmachung des Hinweises auf die Patenterteilung: **20.09.2006**
(21) Anmeldenummer: 04705794.8
(22) Anmeldetag: 28.01.2004
(51) Int. Cl.: B23Q 3/18, B23Q 16/00, B62D 65/00

(54) **AUFNAHMEELEMENT**
RECEIVING ELEMENT
ELEMENT DE RECEPTION

(30) Priorität: 07.02.2003 DE 10305214
(43) Veröffentlichungstag der Anmeldung: 02.11.2005
(73) Patentinhaber: Friatec Aktiengesellschaft, 68229 Mannheim (DE)
(72) Erfinder: SCHRAMM, Peter, 95119 Naila (DE)
(74) Vertreter: Schmitt, Meinrad
(86) Internationale Anmeldenummer: PCT/EP2004/000734
(87) Internationale Veröffentlichungsnummer: WO 2004/069468

(56) Entgegenhaltungen:
- PATENT ABSTRACTS OF JAPAN vol. 2000, no. 01, 31. Januar 2000 (2000-01-31) & JP 11 280721 A (NGK INSULATORS LTD), 15. Oktober 1999 (1999-10-15)
- PATENT ABSTRACTS OF JAPAN vol. 015, no. 061 (M-1081), 13. Februar 1991 (1991-02-13) & JP 02 290696 A (DENKI KAGAKU KOGYO KK), 30. November 1990 (1990-11-30)
- PATENT ABSTRACTS OF JAPAN vol. 016, no. 177 (M-1241), 28. April 1992 (1992-04-28) & JP 04 019031 A (DAIHATSU MOTOR CO LTD), 23. Januar 1992 (1992-01-23)
- PATENT ABSTRACTS OF JAPAN vol. 016, no. 177 (M-1241), 28. April 1992 (1992-04-28) & JP 04 019032 A (DAIHATSU MOTOR CO LTD), 23. Januar 1992 (1992-01-23)

## Beschreibung

Die Erfindung bezieht sich auf ein Aufnahmeelement gemäß den im Oberbegriff des Patentanspruchs 1 angegebenen Merkmalen, das aus dem Dokument JP 11 280 721 A bekannt ist.

Derartige Aufnahmeelemente enthalten einen Bolzen, welcher in eine Bohrung wenigstens eines Bauteiles zur Fixierung und/oder Ausrichtung für die nachfolgende Bearbeitung einführbar ist. Sollen beispielsweise zwei Blechteile durch Schweißen miteinander verbunden werden, so werden in diese miteinander korrespondierende Aufnahmebohrungen eingebracht, in welche nachfolgend das Aufnahmeelement zum Zentrieren und Aufnehmen der Blechteile eingeführt wird. Insbesondere bei großformatigen Bauteilen werden zweckmäßig mehrere derartige Aufnahmeelemente als Fertigungs- oder Montagehilfsmittel vorgesehen. Derartige Aufnahmeelemente können auch als Haltestifte und/oder Führungsstifte in Maschinen, Anlagen oder Bearbeitungssystemen von Bauteilen zum Einsatz gelangen, wobei hier beispielhaft auf Schweißautomaten, Stanzmaschinen oder Pressen verwiesen sei. Die Aufnahmeelemente bestehen üblicherweise komplett aus Stahl und unterliegen einem hohen Verschleiß. Um beim Elektroschweißen, beispielsweise in einem Schweißautomaten, unerwünschte Funkenüberschläge zu vermeiden, müssen zusätzliche Maßnahmen zur Isolierung vorgesehen werden. Des Weiteren können derartige Aufnahmeelemente zur Führung und/oder Ausrichtung wenigstens eines Bauteiles, insbesondere eines Blechteiles bei anderen Fertigungsmaßnahmen, wie beispielsweise in einer Presse, einer Stanzmaschine oder dergleichen zum Einsatz gelangen, wobei selbst bei Ausbildung aus hochwertigem Stahl ein erheblicher Verschleiß gegeben ist und im Hinblick auf enge Fertigungstoleranzen die Standzeiten derartiger Aufnahmeelemente kurz ist, so dass ein erheblicher Aufwand für den erforderlichen Austausch und Ersatz der Aufnahmeelemente bedingt ist.

Hiervon ausgehend liegt der Erfindung die Aufgabe zugrunde, das Aufnahmeelement mit einem geringen konstruktiven Aufwand dahingehend weiterzubilden, dass eine hohe Formbeständigkeit und Positionierungsgenauigkeit für eine lange Lebensdauer sichergestellt wird. Die Herstellung der Aufnahmeelemente soll einen geringen Aufwand und/oder Materialverbrauch erfordern und wirtschaftlich durchführbar sein. Ferner soll in einfacher Weise die für die Herstellung einer Schweißverbindung der Blechteile erforderliche elektrische Isolierung sichergestellt sein.

Die Lösung der Aufgabe erfolgt gemäß den im Patentanspruch 1 angegebenen Merkmalen.

Das vorgeschlagene Aufnahmeelement zeichnet sich durch einen einfachen und funktionsgerechten Aufbau aus. Der Bolzen enthält im Bereich seiner Außenfläche und teilweise über diese hinausragende Stifte aus verschleißfesten Sinterwerkstoffen vorzugsweise Oxidkeramik, wie insbesondere AL2O3, ZrO2, Si3N4 sowie sich daraus ergebende Mischungen. Der Bolzen enthält im Bereich der Außenfläche insbesondere als Nuten ausgebildete Aufnahmen für die genannten Stifte aus Sinterwerkstoff. Im übrigen besteht das Aufnahmeelement bevorzugt aus Stahl und wird in bekannter Weise mittels Dreh- und/oder Fräsmaschinen oder dergleichen gefertigt. Die genannten Stifte sind durch mechanische Bearbeitung, Trockenpressen, Strangpressen, Extrudieren oder in einem Spritzgussverfahren gefertigt und als Teileinsätze in die korrespondierend der Außenkontur derselben vorbereiteten Ausnehmungen bzw. Aufnahmen, welche als Bohrungen oder Nuten im Bereich der Außenfläche des Bolzens angeordnet sind, in geeigneter Weise eingebracht und/oder befestigt.

Die aus verschleißfestem Sinterwerkstoff bestehenden Stifte weisen in bevorzugter Weise einen Vollquerschnitt auf, wobei die geschlossene Querschnittsfläche über die gesamte Länge der Stifte, abgesehen von im Bereich der Spitze des Bolzens bzw. Aufnahmeelements sich befindenden Endflächen, im Wesentlichen konstant ausgebildet ist. Die derart mit Vollquerschnitt und/oder massiv ausgebildeten Stifte ermöglichen somit funktionssicher die Aufnahme und Übertragung von hohen äußeren Belastungen, wie Druck- und Stoßbelastungen, bei der Bearbeitung der Bauteile, in deren Bohrungen oder Löcher die Aufnahmeelemente eingeführt sind.

Die Stifte sind vorteilhaft mit einem vergleichsweise großen Teil ihres Querschnitts, bevorzugt mehr als 50% insbesondere mehr als 80%, in die Aufnahmen des Bolzens eingesetzt. Nach dem Einsetzen der über die bevorzugt zylindrische Außenfläche des Bolzens mit einem vorgegebenen Überstand angeordneten Stifte aus Sinterwerkstoff werden die Stifte durch mechanische Bearbeitung, insbesondere Rundschleifen, auf den erforderlichen Lochdurchmesser des oder der zu bearbeiteten Bauteile bzw. Blechteile bearbeitet, um eine exakte Passung zu gewährleisten. Somit werden in einfacher Weise Toleranzen und/oder Ungenauigkeiten bei der Fertigung der wenigstens zwei Stifte und deren Einbringen und Befestigung in die Aufnahmen des Bolzens in einfacher Weise kompensiert. Erfindungsgemäß liegen von den Stiften diejenigen Flächenbereiche, welche radial am weitesten über die bevorzugt zylindrische Außenfläche des Bolzens vorstehen, auf einer gemeinsamen, insbesondere zylindrischen und/oder zur Längsachse des Bolzens koaxialen Mantelfläche.

Die aus Sinterwerkstoff bestehenden Stifte können einen Vollquerschnitt oder bei geringeren Anforderungen einen rohrförmigen Querschnitt aufweisen, wobei die Außenkontur bevorzugt zylindrisch, im Rahmen der Erfindung aber auch oval, polygonal oder dergleichen vorgegeben sein kann. Die Stifte sind in die korrespondierend ausgebildeten Aufnahmen des Bolzens eingebracht und dort befestigt, insbesondere durch Kleben, Einschrumpfen, Einpressen oder Klemmen. Des Weiteren sind die wenigstens zwei Stifte über den Außenumfang des Stabes bevorzugt gleichmäßig verteilt angeordnet, wobei im Falle von zwei Stiften diese bevorzugt diametral angeordnet sind. Im Falle von drei Stiften sind diese jeweils bevorzugt um 120° bezüglich der Längsachse um diese versetzt angeordnet oder im Falle von vier Stiften sind diese jeweils bevorzugt um 90° bezüglich der Längsachse um diese versetzt angeordnet. Die Anzahl der Stifte ist den betrieblichen Anforderungen entsprechend vorgegeben. Es sei festgehalten, dass mittels der aus Sinterwerkstoff bestehenden Stifte in vorteilhafter Weise eine elektrische Isolierung gewährleistet wird.

Besondere Weiterbildungen und Ausgestaltungen der Erfindung sind in den Unteransprüchen sowie der nachfolgenden Beschreibung bevorzugter Ausführungsbeispiele angegeben.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: das Aufnahmeelement in einer seitlichen Ansicht,
- Fig. 2: eine axiale Ansicht des Aufnahmeelements in Blickrichtung II gemäß Fig 1,
- Fig. 3: eine seitliche Ansicht eines weiteren Aufnahmeelements,
- Fig. 4: eine axiale Ansicht des Aufnahmeelements in Blickrichtung IV gemäß Fig.3.

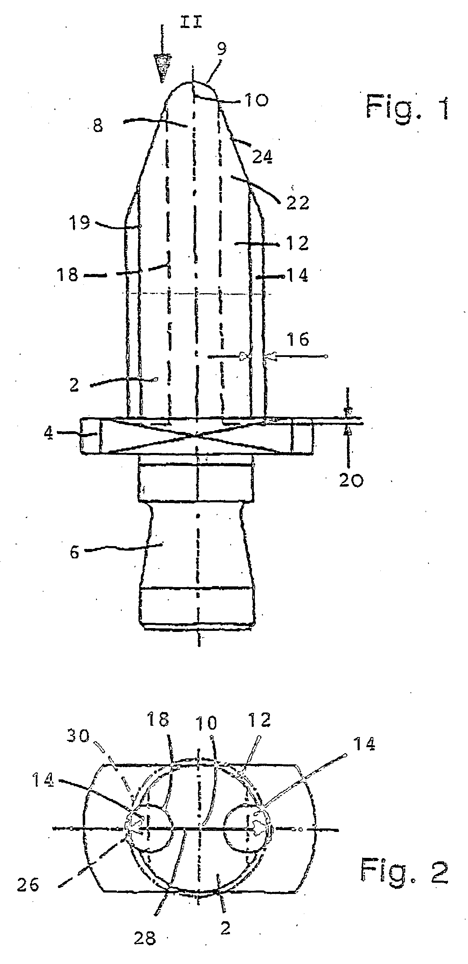

Fig. 1 zeigt in einer seitlichen Ansicht das Aufnahmeelement mit einem Bolzen 2, einem Flansch 4 und einem Endteil 6, wobei der Bolzen 2 gemäß Zeichnung oben eine konische Spitze 8 aufweist, welche am Ende in zweckmäßiger Weise mit einer Abrundung 9 versehen ist. Mittels der Spitze 8 wird das Einführen des Bolzens in eine Bohrung oder ein Loch des oder der zu bearbeitenden, hier nicht dargestellten Bauteile zu erleichtert. Der Flansch 4 dient zur-Anlage des oder der Bauteile. Der Bolzen 2 besitzt eine zur Längsachse 10 bevorzugt koaxiale und/oder zylindrische Außenfläche 12. Im Bereich der Außenfläche 12 sind erfindungsgemäß Stifte 14 aus verschleißfestem Sinterwerkstoff angeordnet, welche mit einem vorgegebenen Überstand 16 über die Außenfläche 12 hinausragen. Wie ersichtlich, sind zwei Stifte 14 diametral und im wesentlichen parallel zur Längsachse 10 angeordnet, doch kann im Rahmen der Erfindung auch eine andere Anzahl von Stiften 14 vorgesehen sein, welche, bezogen auf die Längsachse 10, über den Umfang insbesondere gleichmäßig verteilt sind.

Die Stifte 14 sind teilweise jeweils in bevorzugt achsparallelen Ausnehmungen oder Aufnahmen 18 im Bereich der Außenfläche 12 des Bolzens 2 angeordnet. Die Ausnehmungen oder Aufnahmen 18 sind in radialer Richtung nach außen offen derart ausgebildet, dass die Stifte 14 teilweise in radialer Richtung durch Öffnungen 19 aus den Ausnehmungen 18 herausragen und über die Außenfläche 12 vorstehen. Die Ausnehmungen 18 sind in bevorzugter Weise hintergriffig ausgebildet, um eine zuverlässige Fixierung der Stifte in der jeweiligen Ausnehmung zu gewährleisten. Gemäß der hintergriffigen Ausbildung der Ausnehmungen 18 ist die in Umfangsrichtung im Bereich der Außenfläche 12 gemessene Breite der jeweiligen Öffnung 19 kleiner als die innerhalb der Ausnehmung 18 gemessene Breite des jeweiligen Stifts 14. Besitzt der Stift 14 beispielsweise eine kreisförmige Querschnittsfläche, so ist die genannte Breite der Öffnung 19 kleiner als der Durchmesser des Stiftes 14. Aufgrund der hinterschnittenen Ausbildung der Ausnehmung 18 wird eine funktionssichere und/oder feste Fixierung des Stifts 14 in der Ausnehmung 18 gewährleistet. Diese Aufnahmen 18 sind zweckmäßig als Bohrungen oder als Längsnuten ausgebildet und reichen bevorzugt mit einer vorgegebenen Tiefe 20 in den Flansch 4, wodurch in vorteilhafter Weise eine verbesserte Befestigung der Stifte 14 erreicht ist.

Die einzelnen Stifte 14 weisen, abgesehen von ihren im Bereich der Spitze 8 liegenden Teil 22, einen im Wesentlichen konstanten Querschnitt auf. Im Bereich der Spitze 8 sind die Endflächen 24 der Teile 22 und/oder der Stifte 14 an die Außenkontur der Spitze 8 angepasst und/oder analog zu dieser ausgebildet und in der Ausführungsform gemäß Fig. 1 abgeschrägt. Die Stifte 14 sind in den Aufnahmen 18 in geeigneter Weise befestigt und insbesondere eingeklebt, eingeschrumpft, eingepresst oder geklemmt. Die hinterschnittenen Ausnehmungen 18 erstrecken sich bis in die Spitze 8 und/oder sind im Bereich der Spitze 8 offen ausgebildet. Somit können die Stifte 14 zur Montage von vorn bzw. im Bereich der Spitze 8 in die hinterschnittenen Ausnehmungen 18 problemlos eingeschoben werden. Die Anpassung der Endflächen 24 an die Außenkontur der Spitze 8 kann vor dem Einschieben des jeweiligen Stifts 14 in die zugeordnete Ausnehmung 18 ebenso erfolgen wie nachträglich nach dem Einsetzen, Im letzt genannten Fall ist die Anpassung der Endflächen 24 an die Außenkontur der Spitze 8 problemlos durchführbar. Insbesondere durch Abdrehen oder Schleifen wird bei geringem Fertigungsaufwand erreicht, dass die Endflächen 24 auf der gleichen Mantelfläche liegen wie die übrigen außen liegenden Flächenbereiche der Spitze 8. Da die Endflächen 24 auf der gleichen Außenkontur wie die übrigen Flächenbereiche der Spitze 8 liegen, ist beim Einführen des Aufnahmeelements in eine Bohrung eines zu bearbeitenden Bauteils ein Klemmen oder Verkanten nicht zu befürchten.

Fig. 2 zeigt eine axiale Ansicht des Aufnahmeelements mit den beiden im Bolzen 2 diametral angeordneten Stiften 14. Die Stifte 14 weisen hierbei einen im wesentlichen kreisförmigen Querschnitt auf, wobei der größte Teil der Querschnittsfläche sich innerhalb der Aufnahmen 18 befindet. Somit ist eine sichere Halterung und Befestigung der Stifte 14 im Bolzen 2 gewährleistet. Wie bereits erläutert, ragen die Stifte 14 außen mit dem vorgegebenen Überstand 16 radial über die Außenfläche 12 hinaus. Die aus verschleißfestem Sinterwerkstoff bzw. Keramik bestehenden Stifte 14 weisen bevorzugt einen durchgehenden vollen Querschnitt auf, enthalten also keinen inneren Hohlraum. Die erfindungsgemäß massiv ausgebildeten Stifte aus verschleißfestem Sinterwerkstoff halten somit hohen Druckbelastungen und/oder Stoßbelastungen bei der Bearbeitung der genannten Bauteile stand.

Wie mit gestrichelter Linie 26 angedeutet, stehen die Stifte 14 nach dem Einsetzen in die Aufnahmen 18 zunächst mit einem etwas größeren Abstand über die Außenfläche 12 hinaus. Insbesondere durch mechanische Bearbeitung, wie Rundschleifen, sind die außenliegenden Bereiche der Stifte 14 exakt auf den Durchmesser 24 der Löcher der Bauteile, insbesondere Blechteile, gebracht worden, welche mittels des Aufnahmeelements ausgerichtet bzw. zentriert werden. Bei dem derart erfindungsgemäß gefertigen Aufnahmeelement liegen die radial am weitesten über die Außenfläche 12 ragenden Flächenteile der Stifte 14 auf einer gemeinsamen, zur Längsachse 10 koaxialen und bevorzugt zylindrischen Mantelfläche 30, welche mit strichpunktierter Linie angedeutet ist. Es bleibt festzuhalten, dass hingegen die Endflächen 24 der Stifte 14 bzw. deren Endteile 22 auf der gleichen Außenkontur bzw. Außenfläche der Spitze 8 des Bolzens 2 angeordnet sind.

Die Außenfläche 12 des Bolzens 2 ist bevorzugt zylindrisch ausgebildet. Gleichwohl kann im Rahmen der Erfindung der Bolzen 2 eine hiervon abweichende Außenfläche bzw. Kontur aufweisen wie beispielsweise oval oder polygonal ausgebildet sein. Unabhängig von der konkreten Ausgestaltung der Außenfläche ist diese erfindungsgemäß derart ausgebildet, dass diese innerhalb der oben erläuterten Mantelfläche liegt. Des Weiteren sei festgehalten, dass bei dem erfindungsgemäßen Aufnahmeelement in Umfangsrichtung zwischen den Stiften die radiale Außenfläche des Bolzens 2 frei liegt, wobei die in radialer Richtung am weitesten nach außen vorstehenden Flächenbereiche der Stifte über die Außenfläche mit dem vorgegebenen Überstand vorstehen.

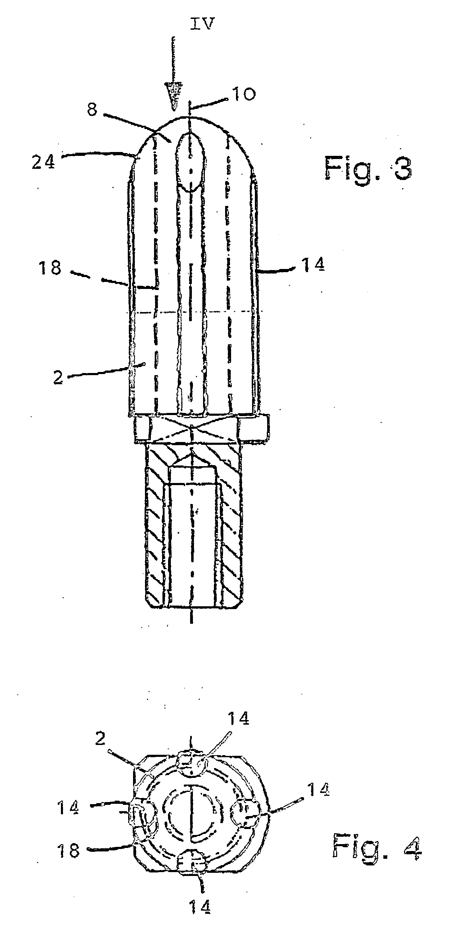

Fig. 3 bzw. 4 zeigen ein weiteres Ausführungsbeispiel des Aufnahmeelements in einer seitlichen bzw. axialen Ansicht. Das Aufnahmeelement enthält vier Sinter- oder Keramikstifte 14, welche im Bereich der Außenfläche des Bolzens 2 bezüglich der Längsachse 10 jeweils um 90° versetzt zueinander angeordnet sind. Die Stifte 14 enden im Bereich der Spitze 8, wobei die Endflächen 24 der Stifte 14 die gleiche Außenkontur wie die Spitze 8 des Bolzens 2 aufweisen, und zwar insbesondere aufgrund der gemeinsamen Endbearbeitung nach dem Einsetzen der Stifte 14 in die hinterschnittenen Ausnehmungen 18 des Bolzens 2.

### Bezugszeichen

- 2: Bolzen
- 4: Flansch
- 6: Endteil
- 8: Spitze von 2
- 9: Abrundung
- 10: Längsachse
- 12: Außenfläche von 2
- 14: Stift
- 16: Überstand
- 18: Ausnehmung in 2
- 19: Öffnung von 18
- 20: Tiefe von 4
- 22: Teil von 14
- 24: Endfläche von 14
- 26: gestrichelte Linie
- 28: Durchmesser
- 30: Mantelfläche

## Patentansprüche

1. Aufnahmeelement, enthaltend einen Bolzen (2), weicher eine zu einer Längsachse (10) im Wesentlichen parallele, insbesondere koaxiale, Außenfläche (12) aufweist und in eine Bohrung wenigstens eines Bauteils, bevorzugt wenigstens zweier Bauteile, einführbar ist,
**dadurch gekennzeichnet, dass** der Bolzen (2) im Bereich der Außenfläche (12) wenigstens zwei Ausnehmungen (18) mit Öffnungen (19) aufweist und dass in den Ausnehmungen (18) aus verschleißfestem Sinterwerkstoff bestehende oder solchen enthaltende Stifte (14) angeordnet sind, welche durch die genannten Öffnungen (19) teilweise radial durchgreifen und über die Außenfläche (12) mit einem vorgegebenen Überstand (16) vorstehen.

2. Aufnahmeelement nach Anspruch 1, **dadurch gekennzeichnet, dass** als Sinterwerkstoffe Oxidkeramik, insbesondere AL2O3, ZrO2, Si3N4 oder Mischungen desselben vorgesehen sind, wobei der Bolzen (2) und/oder das Aufnahmeelement im Übrigen insbesondere aus Metall, bevorzugt aus Stahl, besteht.

3. Aufnahmeelement nach Anspruch 1 oder 2, **dadurch gekennzeichnet, dass** die Stifte (14) massiv ausgebildet sind und/oder einen Vollquerschnitt aufweisen.

4. Aufnahmeelement nach einem der Ansprüche 1 bis 3, **dadurch gekennzeichnet, dass** die Stifte (14), abgesehen von in einer Spitze (8) des Bolzens (2) vorgesehenen Teilen (22), über die gesamte axiale Länge einen im Wesentlichen konstanten Querschnitt aufweisen.

5. Aufnahmeelement nach einem der Ansprüche 1 bis 4, **dadurch gekennzeichnet, dass** in Umfangsrichtung zwischen den Stiften (14) die Außenfläche (12) des Bolzens (2) frei liegt und/oder dass die zwischen den Öffnungen (19) befindlichen Flächenteile der Außenfläche (14) radial innerhalb einer Mantelfläche (30) liegen, in welcher sich die radial am weitesten nach außen erstreckenden Flächenbereiche der Stifte (14) befinden.

6. Aufnahmeelement nach einem der Ansprüche 1 bis 5, **dadurch gekennzeichnet, dass** die Ausnehmungen (18) einen hinterschnittenen Querschnitt aufweisen und/oder dass die Öffnungen (19) in Umfangsrichtung eine Breite aufweisen, welche um einen vorgegebenen Wert kleiner ist als die maximale Breite der innerhalb des Bolzens (2) befindlichen Ausnehmung (18) und/oder des darin angeordneten Stiftes (14).

7. Aufnahmeelement nach einem der Ansprüche 1 bis 6, **dadurch gekennzeichnet, dass** die Stifte (14) bevorzugt zu mehr als 50%, insbesondere zu mehr als 70% ihrer Querschnittsfläche in die Ausnehmungen (18) eingesetzt sind.

8. Aufnahmeelement nach einem der Ansprüche 1 bis 7, **dadurch gekennzeichnet, dass** die Ausnehmungen (18) des Bolzens (2) und/oder die Stifte (14) in einer vorgegebenen Tiefe (20) in einen an den Bolzen (2) anschließenden Flansch (4) hineinragen und/oder dass die im Bereich der Spitze (8) des Bolzens (2) vorhandenen Teile (22) der Stifte (14) sich im Wesentlichen auf der Außenkontur der Spitze (8) befinden.

9. Aufnahmeelement nach einem der Ansprüche 1 bis 8, **dadurch gekennzeichnet, dass** die wenigstens zwei Stifte (14) bezüglich der Längsachse (10) des Bolzens (2) über den Umfang im Wesentlichen gleichmäßig verteilt angeordnet sind.

10. Aufnahmeelement nach einem der Ansprüche 1 bis 9, **dadurch gekennzeichnet, dass** die über die Außenfläche (14) am weitesten überstehenden Fächenbereiche der Stifte (14) auf einer gemeinsamen Mantelfläche (30) liegen, welche insbesondere koaxial zur Längsachse (10) des Bolzens (2) liegt und/oder zylindrisch ausgebildet ist.

## Claims

1. Receiving element containing a bolt (2) which has an, in particular coaxial, exterior surface (12) substantially parallel to a longitudinal axis (10) and can be inserted into a bore in at least one component, preferably at least two components, **characterised in that** the bolt (2) has at least two recesses (18) with orifices (19) in the region of the exterior surface (12) and **in that** pins (14) consisting of or containing wear-resistant sintered material are arranged in the recesses (18) and partially radially pass through said orifices (19) and project beyond the exterior surface (12) with a predetermined overhang (16).

2. Receiving element according to claim 1, **characterised in that** oxide ceramics, in particular Al₂O₃, ZrO₂, Si₃N₄ or mixtures thereof, are provided as sintered material, the bolt (2) and/or the receiving element otherwise consisting, in particular, of metal, preferably of steel.

3. Receiving element according to either claim 1 or claim 2, **characterised in that** said pins (14) are solid and/or have a solid cross-section.

4. Receiving element according to any one of claims 1 to 3, **characterised in that** apart from portions (22) provided in a tip (8) of the bolt (2), the pins (14) have a substantially constant cross-section over their entire axial length.

5. Receiving element according to any one of claims 1 to 4, **characterised in that** in the circumferential direction between the pins (14) the exterior surface (12) of the bolt (2) is free and/or **in that** the surface portions of the exterior surface (14) located between the orifices (19) are located radially within a lateral surface (30) in which the surface regions of the pins (14) that extend radially furthest outward are located.

6. Receiving element according to any of claims 1 to 5, **characterised in that** the recesses (18) have an undercut cross-section and/or **in that** the orifices (19) have in the circumferential direction a width which is smaller by a predetermined value than the maximum width of the recess (18) located within the bolt (2) and/or of the pin (14) arranged therein.

7. Receiving element according to any one of claims 1 to 6, **characterised in that** the pins (14) are inserted into the recesses (18) with preferably more than 50 %, in particular more than 70 %, of their cross-sectional area.

8. Receiving element according to any one of claims 1 to 7, **characterised in that** the recesses (18) of the bolt (2) and/or the pins (14) project at a predetermined depth (20) into a flange (4) connected to the bolt (2) and/or **in that** the portions (22) of the pins (14) present in the region of the tip (8) are located substantially on the exterior contour of the tip (8).

9. Receiving element according to any one of claims 1 to 8, **characterised in that** the at least two pins (14) are distributed uniformly over the circumference with respect to the longitudinal axis (10) of the bolt (2).

10. Receiving element according to any one of claims 1 to 9, **characterised in that** the surface regions of the pins (14) projecting furthest beyond the exterior surface (14) are located on a common lateral surface (30) located, in particular, coaxially to the longitudinal axis (10) of the bolt (2) and/or being cylindrical.

## Revendications

1. Élément de réception, contenant un boulon (2) qui présente une surface extérieure (12) sensiblement parallèle, en particulier coaxiale, à un axe longitudinal (10) et qui peut être introduit dans un perçage d'au moins une pièce, de préférence de deux pièces,
***caractérisé en ce que*** le boulon (2) comprend au niveau de la surface extérieure (12) au moins deux évidements (18) avec des ouvertures (19) et ***en ce que*** dans les évidements (18) sont placés des ergots (14) constitués d'un matériau fritté résistant à l'usure ou contenant un tel matériau, ergots qui passent partiellement de façon radiale à travers lesdites ouvertures (19) et qui forment saillie d'une distance (16) prédéterminée par rapport à la surface extérieure (12).

2. Élément de réception selon la revendication 1, ***caractérisé en ce que**,* comme matériau fritté, il est prévu une céramique oxyde, en particulier Al₂O₃, ZrO₂, Si₃N₄ ou des mélanges de ceux-ci, le boulon (2) et/ou l'élément de réception étant par ailleurs constitué(s) en particulier de métal, de préférence en acier.

3. Élément de réception selon la revendication 1 ou 2, ***caractérisé en ce que*** les ergots (14) sont réalisés massifs et/ou présentent une section pleine.

4. Élément de réception selon l'une quelconque des revendications 1 à 3, ***caractérisé en ce que*** les ergots (14), hormis des parties (22) prévues dans une pointe (8) du boulon (2), présentent une section pour l'essentiel constante sur toute la longueur axiale.

5. Élément de réception selon l'une quelconque des revendications 1 à 4, ***caractérisé en ce qu*'**entre les ergots (14) dans la direction circonférentielle, la surface extérieure (12) du boulon (2) est exposée et/ou ***en ce que*** les parties de la surface extérieure (14) situées entre les ouvertures (19) se trouvent radialement à l'intérieur d'une surface d'enveloppe (30) dans laquelle se trouvent les zones de surface des ergots (14) s'étendant radialement le plus loin vers l'extérieur.

6. Élément de réception selon l'une quelconque des revendications 1 à 5, ***caractérisé en ce que*** les évidements (18) présentent une section en contre-dépouille et/ou ***en ce que*** les ouvertures (18) présentent dans la direction circonférentielle une largeur qui est plus petite d'un montant prédéterminé à la largeur maximale de l'évidement (18) situé à l'intérieur du boulon (2) et/ou de l'ergot (14) situé dedans.

7. Élément de réception selon l'une quelconque des revendications 1 à 6, ***caractérisé en ce que*** les ergots (14) sont insérés dans les évidements (18) de préférence sur plus de 50 %, en particulier sur plus de 70 %, de leur surface de section.

8. Élément de réception selon l'une quelconque des revendications 1 à 7, ***caractérisé en ce que*** les évidements (18) du boulon (2) et/ou les ergots (14) rentrent sur une profondeur prédéterminée (20) dans une bride (4) faisant suite au boulon (2) et/ou ***en ce que*** les parties (22) des ergots (14) présentes au niveau de la pointe (8) du boulon (2) se trouvent pour l'essentiel sur le contour extérieur de la pointe (8).

9. Élément de réception selon l'une quelconque des revendications 1 à 8, ***caractérisé en ce que*** les ergots (14) au nombre d'au moins deux sont répartis pour l'essentiel régulièrement sur la circonférence par rapport à l'axe longitudinal (10) du boulon (2).

10. Élément de réception selon l'une quelconque des revendications 1 à 9, ***caractérisé en ce que*** les zones de surface des ergots (14) dépassant le plus loin de la surface extérieure (14) se trouvent sur une surface d'enveloppe commune (30) qui est disposée en particulier de manière coaxiale à l'axe longitudinal (10) du boulon (2) et/ou est de configuration cylindrique.
